# EUROPEAN PATENT APPLICATION

(11) **EP 4 545 232 A1**
(43) Date of publication of application: **30.04.2025**
(21) Application number: 23205622.6
(22) Date of filing: 24.10.2023
(51) Int. Cl.: B23K 1/19, B23K 1/20

(54) **COMPONENT AND METHOD FOR MANUFACTURING SUCH A COMPONENT**

(71) Applicant: Airbus SAS, 31700 Blagnac Cedex (FR)
(72) Inventor: Beier, Uwe, 82024 Taufkirchen (DE); Friedberger, Alois, 82024 Taufkirchen (DE)
(74) Representative: Isarpatent

(57) **Abstract**

The present invention provides a component (100) comprising at least a first sub-component (101) and a second sub-component (102a, b, c, d), each consisting fully or partially of metal or metal alloy material or having an at least partially metallized surface (120) or surface region, the first sub-component (101) and the second sub-component (102a, b, c, d) providing a pair of connection interfaces (111; 112) configured to establish a permanent connection of the first sub-component (101) and the second sub-component (102a, b, c, d), wherein at least one of the pair of connection interfaces (111; 112) comprises nanowires. The present invention further provides a method for manufacturing such a component.

## Description

The present invention pertains to a component and a method for manufacturing such a component.

Although it can be used in many applications, the present invention and the problems underlying it are explained in greater detail in relation to passenger aircraft. However, the methods and devices described can likewise be used in vehicles in all sectors of the transport industry, e.g. for road vehicles, for rail vehicles, for general aircraft or for watercraft. Furthermore, the invention can be used in any kind twoor three-dimensional workpieces and the manufacturing of such workpieces.

Manufacturing metallic components, especially with complex geometries usually require lots of milling or need to be fabricated in high temperature processes such as welding. Milling processes for example require a thick metal plate where all metal not needed in the final component has to be removed by milling until the final shape of the component is obtained. This milling process generates a lot of metal waste and high costs for the original material. On the other hand, high temperature processes such as welding are often not allowed since the mechanical properties of the material and final workpieces are not sustained during these processes.

Automated fiber placement and automated tape placement are low-temperature joining processes for joining materials. Automated fiber placement and automated tape placement are known processes for composite manufacturing, also in the process of manufacturing aircraft parts.

Against this background, it is an object of the present invention to find a solution for manufacturing metallic components which require less material and sustain the mechanical properties of the final workpieces.

This object is achieved by a component having the features of claim 1 and a method having the features of claim 8.

According to a first aspect of the invention, a component is provided, comprising a first sub-component and a second sub-component, each consisting at least partially of metal or metal alloy material or having an at least partially metallized surface or surface region. The first sub-component and the second sub-component provide a pair of connection interfaces configured to establish a permanent connection of the first and the second sub-component, wherein at least one of the pair of connection interfaces comprises nanowires.

The nanowires are grown on the surface of one or both of the connection interfaces that are then pressed together with the treated surfaces. During this, the nanowires interlock, diffusion of metal atoms takes place and the subcomponents are joint, thereby providing good mechanical properties of the connection. The establishment of a permanent connection can take place in particular at standard room temperature and within a few milliseconds. If only one of the connection interfaces of the sub-components to be joined is covered with nanowires, joining may require elevated temperatures of in particular up to 170°C and longer time of up to 10 seconds. Both variations are encompassed by the present invention.

A further aspect of the invention lies in a method for providing a component comprising at least a first sub-component and a second sub-component, each consisting fully or partially of metal or metal alloy material or having an at least partially metallized surface or surface region that provide a pair of connection interfaces configured to establish a permanent connection of the first and the second subcomponent. The method comprises establishing a permanent connection between the sub-components at a pair of connection interfaces of the first sub-component and the second sub-component, wherein at least one of the first sub-component and the second sub-component consisting at least partially of a metal or metal alloy material or providing an at least partially metallized connection interface, wherein at least one of the connection interfaces comprises nanowires.

Advantageous embodiments and further developments are apparent from the further dependent claims and from the description with reference to the figures.

According to another aspect of the invention, at least one of the first sub-component and the second sub-component is an at least semi-finished workpiece having a geometry providing the connection interface in at least one surface plane. This provides an advantage in manufacturing finished components having complex geometries and that can only be manufactured by standard milling or welding processes.

According to an embodiment of the component, the surface plane of at least one of the first sub-component and the second sub-component is flat or at least partially bent. This can provide an advantage during the manufacturing of complex three-dimensional parts having a combination of bent and flat sub-components required to provide the finished component.

According to a further embodiment of the component, at least one of the first subcomponent and the second sub-component consists of or comprises a flexible material or is configured as a tape or sheet. It is an advantage of this embodiment that also cylindrical or nearly-cylindrical components or components having complex three-dimensional geometries can be provided with less manufacturing efforts than in standard processes such as milling or high-temperature welding, by talking advantage of the permanent connection establish by using nanowires. It is a further advantage that the degrees of freedom in possible geometries of the finished component are increased. The invention is not restricted to a two-dimensional configuration of the component but also encompasses complex three-dimensional configurations.

According to a further embodiment of the component the first sub-component and the second sub-component each comprise a plurality of connection interfaces wherein the sub-components are permanently connected by at least one connection interface of the first component and at least one connection interface of the second sub-component. It is an advantage of this embodiment, that a plurality of connection interfaces are provide and all or only specific connection interfaces can be selected for growing nanowires thereon and to use these nanowires to join the sub-components.

According to a further embodiment of the component at least one of the subcomponents has a three-dimensional, in particular cylindrical, or at least partially cylindrical or other geometry. This allows for joining flexible subcomponents with those sub-components to cover the surface of the sub-component thereby using the advantages of nanowire joining of the subcomponent.

In an embodiment the established permanent connection has a pull-shear strengths of at least between 40 and 60 MPa, a peel force of at least up to 1,7 N/mm and leakage rate of at most between 5⁻⁹ and 10⁻⁸ mbar*l/s. This embodiment has the advantage that a finished component can be provided that has enhanced physical properties established without the need to use standard manufacturing such as milling or high-temperature welding processes.

According to a further embodiment of the component, the first sub-component is configured as a semi-finished tube or tank structure made of metal or a metal alloy or providing a metallic or metallized surface or a plurality of metallic or metallized surface regions and the second sub-component is configured as a tape made of metal or a metal alloy or providing a metallic or metallized surface or a plurality of metallic or metallized surface regions and wherein the second sub-component is placed on the first sub-component in particular by winding or taping and joining is effected by nanowires grown on one or both of the sub-components or the respective connection interfaces provided thereon. It is considered advantageous in this embodiment, that a semi-finished tube or tank structure made of a nonmetallic material, such as a composite material only having a metallic or metallized surface or surface regions can be laid with a layer of a metal or metal alloy material to achieve a leakage proof cover or surface and/or a metallic shell covering the composite material.

According to a further embodiment of the component, the component is configured as an aircraft component, in particular as a lightweight structural part for an aircraft. It is considered advantageous in this embodiment that the invention component can replace or supplement aircraft components or structural parts of aircrafts that are usually manufactured in a milling or welding process. The invention component is in particular configured as a lightweight component such as structural parts for aircraft made e.g. from aluminum or other suitable metals or metal alloys.

Aircraft components or structural parts are usually machined from solid material resulting in up to 95% of material loss during milling or manufactured in a welding process requiring high efforts to sustain mechanical and structural properties of the material and final workpieces as well as welding seams. With the invention component and advantageous reduction of material use can be achieved and mechanical and structural properties of the material and final workpieces can be sustained. The invention component provides aircraft parts that have the same properties as parts manufactured in state-of the art processes thereby fulfilling the quality requirements and meeting the related regulations for aircraft parts.

Hence, in a further aspect of the invention, an aircraft may comprise a component according to the invention.

According to a further embodiment of the method, at least one of the first and the second sub-component comprises a plurality of connection interfaces. This allows for an advantageously easy establishment of the connection with the invention method and can even be utilized to generate complex structures which cannot manufactured by standard processes such as milling or high-temperature welding.

According to a further embodiment of the method, establishing the permanent connection comprises an application of at least one of pressure, heat, and electrical current to at least one of the pair of connection interfaces. It is an advantage of the invention method, that by using nanowires, the pressure or temperature needed to establish the permanent connection is significantly lower than in standard processes due to the interlocking of the nanowires and interdiffusion of metal atoms that requires no or only a short impact of elevated temperatures and/or pressure. This low temperature process sustains the material properties of the subcomponents.

According to a further embodiment the method comprises growing nanowires on at least one of the first sub-component, the second sub-component and the connection interfaces before establishing the permanent connection. This has the advantage, that nanowires must be grown on only one of sub-components or connection interfaces and a permanent connection can nevertheless be established as the sub-components or connection interfaces provide a surface the nanowires can interlock with.

According to a further embodiment the method at least one of the first sub-component and the second sub-component consists of or comprises a flexible material or is configured as a tape or a sheet. This allows for advantageously using the invention method with sub-components having complex or bent surfaces.

According to a further embodiment the method the metal or metal alloy material is selected from the group comprising titanium, magnesium, steel, copper, aluminum, Invar, alloys and mixtures thereof. This allows to use the advantages of the invention with pairings of sub-components consisting of the same or different materials. As also encompassed by the invention in another embodiment the first and/or the second sub-component is in particular made of Invar to manufacture components with low coefficient of thermal expansion. Such components are useful e.g. in cryogenic applications. To support growth of nanowires on Invar surfaces, these surfaces can be metallized e.g. with copper or another suitable metallic material. In an alternative embodiment of the invention, aluminum can be used as a metallic material of the first and/or second sub-component. If aluminum is used, a surface treatment to remove oxide layers from the aluminum surface can be applied to enable or support growth of nanowires.

In a further embodiment of the invention the method comprises depositing a layer of metal or metal alloy material suitable for growing nanowires on at least one of the first sub-component, the second sub-component and the connection interfaces. Non-limiting examples for suitable metal materials are copper, gold, silver, and nickel. This deposition allows for advantageously using the invention method also in cases where one or both sub-components or connection interfaces do not or not fully consist of a metal or metal alloy material and wherein a surface for growing nanowires is provided by the metal or metal allow layer deposited on such material.

The invention will be explained in greater detail with reference to exemplary embodiments depicted in the drawings as appended.
- Fig. 1: schematically depicts a perspective view of a component according to an embodiment of the invention;
- Fig. 2: schematically depicts a perspective view of a component according to another embodiment of the invention;
- Fig. 3: schematically depicts a perspective view of a component according to another embodiment of the invention during manufacturing;
- Fig. 4: schematically depicts an embodiment of the invention method; and
- Fig. 5: schematically depicts another embodiment of the invention method.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

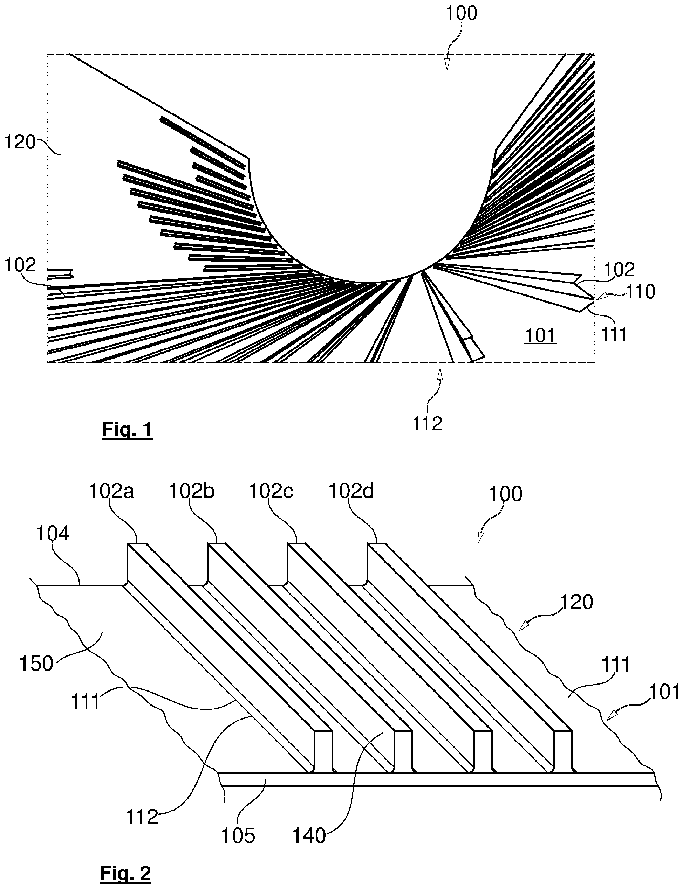

Fig. 1 schematically depicts a perspective view of a component 100 according to an embodiment of the invention. The component 100 comprises a first sub-component 101, which is configured as a bent plane such as a sheet metal. A plurality of second sub-components 102, having a linear extension with respect to the first sub-component 101 are permanently connected with the first sub-component 101. The second subcomponents 102 provide a connection interface 110 in surface facing the sheet metal of the first sub-component 101. In the connection interfaces 110, nanowires have been grown, used to establish a permanent connection between the first sub-component 101 and the second subcomponents 102. During manufacturing the component 100, the second subcomponents 102 are laid down on the surface 120 of the first sub-component 100 and pressure is applied on the connection interfaces 110 of the second subcomponents 102 in the area of contact 130 with the first sub-component 101. The first sub-component 101 also provides a connection interface 112 on which no nanowires are grown. In the embodiment as shown in figure 1 only the second subcomponents 102 are provided with nanowires. Due to the first sub-component 101 being made of the sheet metal material, a permanent connection between the second subcomponents 102 and the first sub-component 101 can be established by using the nanowires grown only on the second sub-component 102 and in the respective connection interfaces 110. In the manufacturing of the component 100 by the method according to the invention, no welding is required to establish a permanent connection between the first sub-component 101 and the second subcomponents 102. This has the beneficial effect, that in contrast to using high-temperature welding processes the material properties of the subcomponents 101, 102 can be sustained.

As shown in Fig. 1, the invention method can be used to permanently connect subcomponents 101, 102 having surfaces 120 where the connection interfaces 111, 112 are foreseen, being either of bent or flat.

Fig. 2 schematically depicts a perspective view of a component 100 according to another embodiment of the invention. The component 100 consists of a first subcomponent 101 provided as a metal plate 150 with a substantially flat or even surface 120. On the first sub-component 101 a total of four second subcomponents 102a, b, c, d are provided, that form ribs 140 that extend horizontally between a first edge 104 and a second edge 105 of first sub-component 101. The second subcomponents 102a, b, c, d intended to form the ribs 140 on the first sub-component 101 are permanently connected with the first sub-component 101 using a method according to the present invention. The first and the second sub-component 101, 102 provide connection interfaces 111, 112 where nanowires have been grown. The nanowires are only grown in those areas of the first and second subcomponent 101, 102 that are dedicated to provide the connection interfaces 111, 112 between the sub-components 101, 102. Having established the permanent connection between the first sub-component 101 and the second subcomponents 102, the metal plate 150 being the first sub-component 101 is provided with ribs 140 extending in orthogonal direction with respect to the main plane of the first sub-component 101. In a milling process known in the art a thick metal plate is required wherein ribs 140 are formed by milling excess metal material until the final thickness and the ribs 140 are obtained. This process can be fully replaced by the invention method thus saving material and worktime required for milling.

The embodiment of the component as shown in Fig. 2 can for example serve as an aircraft shell or another flat work piece that requires enhanced stiffness. Apart from the method to manufacture the component 100 of Fig. 2 as described before, in an alternative embodiment, not shown in Fig. 2, nanowires grown on the entire surface 120 of the first sub-component 101 provide an unspecific connection interface 111. The second subcomponents 102a, b, c, d could be laid on this surface and permanently connect with the first sub-components 101 by interlocking with connection interfaces 112 using the nanowires. As an alternative, only those regions of the surface 120 of the second subcomponents 102a, b, c, d that are intended to be permanently connected with the first sub-component 101 could be supplied with nanowires in the then established connection interfaces 111, 112. Also in this case, a permanent connection between the first sub-component 101 and the second subcomponents 102a, b, c, d could be established by means of nanowire interlocking. The invention is not restricted to eh aforesaid alternatives but also encompasses embodiments wherein nanowires are grown in the connection interfaces 111, 112 of both sub-components 101, 102a, b, c, d.

In the component 100 as shown in Fig. 2, subcomponents 101, 102a, b, c, d consist of a metal material. Alternatively, first sub-component 101 and/or second subcomponents 102a, b, c, d can consist of a non-metallic material, such as composite material having a layer of metal deposited on the surface 120 or in regions of the surface 120 that are intended to serve as connection interfaces 111, 112 for joining the sub-components 101, 102a, b, c, d. Second subcomponents 102a, b, c, d can also be formed by using a plurality of metal tapes (not shown) placed upon each other to reach the desired height of ribs 140. Width of ribs 140 is defined by the width of the tapes and can be adapted to the requirements of the final geometry of the component. Each metal tape is provided with nanowires that interconnect with the respective previous underlying metal tape.

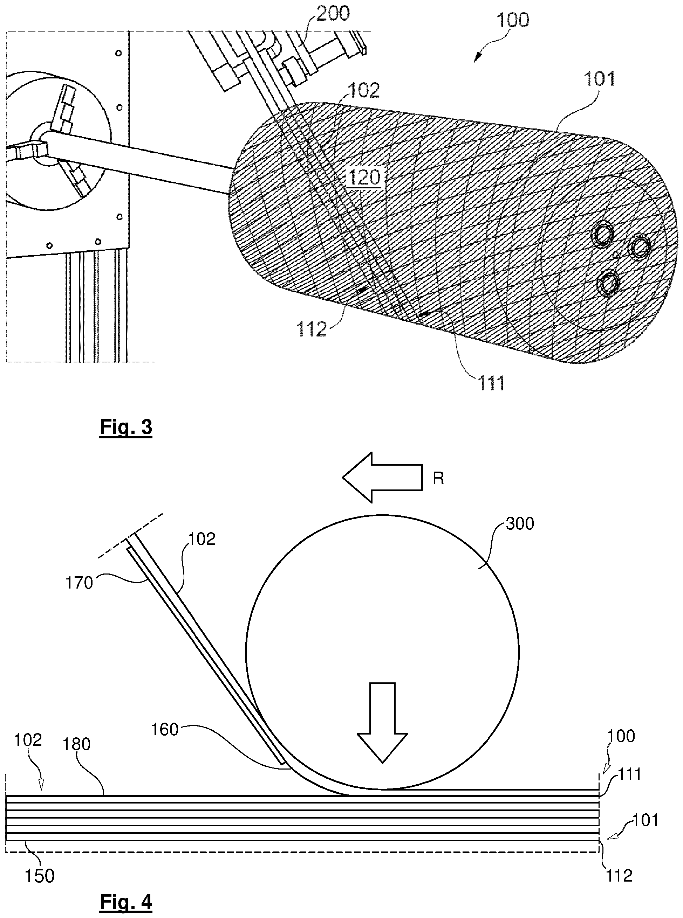

Fig. 3 schematically depicts a perspective view of a component 100 according to another embodiment of the invention during manufacturing. In this embodiment, the component 100 is configured as a tank having a cylindrical geometry. Such tanks are in some circumstances used for the storage of liquid nitrogen (LN₂) or liquid hydrogen (LHz) and can consist of a composite material, in particular when used in the aircraft industry due to the requirement of weight saving. The invention method as described herein is not restricted to first or second components 101, 102a, b, c, d consisting of composites but also encompasses other materials such as Invar. It is favorable to cover the outer surface 120 of such tanks with a metallic shell to decrease leakage rates.

As shown in Fig. 3 the first sub-component 101 herein is the tank body made of a composite material whereas the second sub-component 102 is configured as a metal tape permanently connected with the first sub-component using the method according to the present invention. To establish a permanent connection, the surface 120 of the first sub-component 101 is provided with a surface treatment to metalize the entire surface 120 of particular regions of the surface 120 to provide a connection interface 111 for joining with the connection interface 112 of the tape-shaped second sub-component 102 made of a metallic material. To generate a metallized surface or surface region of the first sub-component 101 a metal layer, e. g. consisting of copper is deposited on the surface or the particular surface regions where the connection interfaces 111, 112 are to be formed. Deposition of metal layers is performed in standard processes know in the art. The metal layer can be used as a basis for growing nanowires used to establish the permanent connection between the tape-shaped second sub-component 102 wound on the first sub-component 101 by means of a winding tool 200. As an alternative to growing nanowires on the surface 120 of the first sub-component 101, nanowires can be grown on the metal tape used as second sub-component 102. During placement of the metal tapes on the tank surface 120 nanowire interlocking takes place. Interlocking can be supported by the application of pressure and/or heat onto the connection interfaces 111, 112. To increase hydrogen tightness of the tank, metal tapes, being the second sub-component 102 are placed with some overlap on the surface of the tank being the first sub-component 101.

Fig. 4 schematically depicts an embodiment of the invention method. Fig. 4 depicts the manufacturing process of the component 100 consisting of the first sub-component 101 being a flat metal plate 150 providing a connection interface 112 to which a tape or sheet like second sub-component 102 is permanently connected. The second sub-component 102 consists of staggered metal tapes or sheets that themselves are connected to each other using nanowires in the respective connection interfaces 111. Placing of a plurality of the metal tapes or sheets being the second sub-component 102 will increase the thickness of areas of the metal plate 150 being the first sub-component 101. The use of nanowires establishes a permanent connection of the first sub-component 101 with the second sub-component 102 by the nanowires grown on the bottom surface 160 of the lowermost metal tape or sheet. Each of the second subcomponents 102 is provided with a connection interface 111 that has a nanowire coating 170. Nanowires are grown in those areas of the tape or sheet that are intended to provide connection interfaces 111 with the first sub-component 101 or the next tape or sheet layer of the second sub-component 102. The connection interface 111 is thereby formed on the bottom surface 160 upon lay-up, that is the side which is facing the top surface 180 of the underlying tape or sheet to which it will be joined. To connect the metal tapes or sheets and the first and second sub-component 101, 102, a compaction roller 300 is provided that applies pressure onto the metal tape or sheet while moving over the subcomponents in a first direction R. The second sub-component 102 is continuously fed into the compaction region and is thereby laid on the previous layer and connected therewith. The second sub-component 102 is provided as a roll-up of a flexible tape material on which nanowires are grown. As such, endless metallic tapes can be modified with nanowires in a roll-to-roll process, thus enabling upscaling of the method. In an alternative embodiment (not shown) nanowires can be grown in the connection interfaces 111, 112 of both first and second sub-components 101, 102 or on opposite surfaces of the second sub-component 102. To avoid preliminary reaction of the nanowires an intermediate protective layer is provided at least on the second sub-component 102 that is removed prior to laying the second sub-component 102 on the previously laid first subcomponent 101 having nanowires grown in the connection interface 111.

By means of the compaction roller 300, pressure is applied to the connection interface 111, 112 wherein the nanowires are provided and achieves a joining based on interlocking of the nanowires.

Since the interlocking of nanowires by diffusion of metal atoms within the surface area of the nanowires can be enhanced by the application of temperature, the compaction roller 300 can itself be heated to introduce heat in the connection interfaces 111, 112. In another embodiment of the invention method, the introduction of heat can be established by other means, such as infrared radiation or a heat fan (not shown) positioned next to the connection interfaces 111, 112 where the permanent connection is to be established. As the temperature required to obtain the beneficial effects of the joining process based on diffusion of nanowires according to the present invention method is low, the mechanical properties of the subcomponents 101, 102 can be fully preserved in contrast to high-temperature welding processes used in the art.

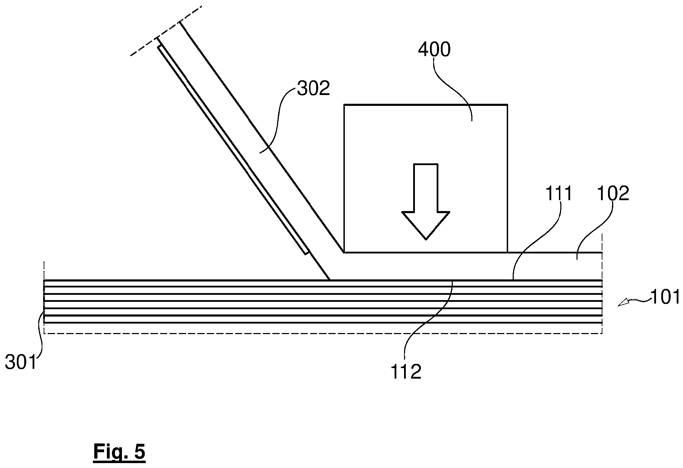

Fig. 5 schematically depicts another embodiment of the invention method. In the embodiment of Fig. 5, the first sub-component 101 is configured as a stack 301 of layers of sheet- or band-like material and the second sub-component 102 is provided as planar material with an area 302 projecting upward at an angle. Only the planar part of the second sub-component 102 will be connected to the first subcomponent 101. The connection interface 111 of the first sub-component 101 is provided in the planar part of the first sub-component 101. Instead of using a compaction roller 300 as shown in Fig. 4, this embodiment of the invention method uses a stamp 400, that exerts pressure on the connection interfaces 111, 112 and achieves the permanent connection between the first and second subcomponent 101, 102 at the connection interfaces 111, 112. The stamp 400 exerts pressure for a specific time period and to an extent that is needed to support the interlocking of the nanowires. In addition to pressure, the stamp 400 can also be a heated element, that introduces heat into the connection interfaces 111, 112 to enhance the reactivity of the nanowires by increasing the diffusion of the metal atoms at the surface area of the nanowires. As described in connection with Fig. 4, also in the embodiment of the method as shown in Fig. 5 one or more additional heat sources can be provided, such as infrared radiation or a heating fan, which directly impact on the connection interfaces 111, 112 during the establishment of the permanent connection between the subcomponents 101, 102.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: component
- 101: first sub-component
- 102a, b, c, d: second sub-component
- 104: first edge
- 105: second edge
- 111, 112: connection interface
- 120: surface
- 130: area of contact
- 140: rib
- 150: metal plate
- 200: winding tool
- 160: bottom surface
- 170: nanowire coating
- 180: top surface
- 300: compaction roller
- 301: stack
- 302: area
- 400: stamp
- R: direction

## Claims

1. Component (100) comprising a first sub-component (101) and a second sub-component (102a, b, c, d), each consisting at least partially of metal or metal alloy material or having an at least partially metallized surface (120) or surface region, the first sub-component (101) and the second sub-component (102a, b, c, d) providing a pair of connection interfaces (111; 112) configured to establish a permanent connection of the first sub-component (101) and the second sub-component (102a, b, c, d), wherein at least one of the pair of connection interfaces (111; 112) comprises nanowires.

2. Component (100) according to claim 1, wherein at least one of the first subcomponent (101) and the second sub-component (102a, b, c, d) is an at least semi-finished workpiece having a geometry providing the connection interface (111; 112) in at least one surface plane.

3. Component (100) according to any of claims 2, wherein the surface plane of at least one of the first sub-component (101) and the second sub-component (102a, b, c, d) is flat or at least partially bent.

4. Component (100) according to any of claims 1 to 3, wherein at least one of the first sub-component (101) and the second sub-component (102a, b, c, d) consists of or comprises a flexible material or is configured as a tape or sheet.

5. Component (100) according to any of claims 1 to 4, wherein the first subcomponent (101) and the second sub-component (102a, b, c, d) each comprise a plurality of connection interfaces and are permanently connected by at least one connection interface (111; 112) of the first sub-component (101) and at least one connection interface (111; 112) of the second subcomponent (102a, b, c, d).

6. Component (100) according to any of claims 1 to 5, wherein at least one of the sub-components (101, 102a, b, c, d) has a three-dimensional, in particular cylindrical or at least partially cylindrical geometry.

7. Component (100) according to any of claims 1 to 6, wherein the first subcomponent (101) is configured as a semi-finished tube or tank structure made of metal or a metal alloy or providing a metallic or metallized surface (120) or a plurality of metallic or metallized surface regions and the second sub-component (102a, b, c, d) is configured as a tape made of metal or a metal alloy or providing a metallic or metallized surface (120) or a plurality of metallic or metallized surface regions and wherein the second sub-component (102a, b, c, d) is placed on the first sub-component (101) in particular by winding or taping.

8. Component according to any of claims 1 to 7, wherein the component is configured as an aircraft component, in particular as a lightweight structural part for an aircraft.

9. Method for providing a component (100) according to any one of claims 1 to 8, wherein the method comprises establishing a permanent connection between the sub-components (101; 102a, b, c, d) at a pair of connection interfaces (111; 112) of the first sub-component (101) and the second subcomponent, with at least one of the first sub-component (101) and the second sub-component (102a, b, c, d) consisting at least partially of a metal or metal alloy material or providing an at least partially metallized connection interface (111; 112), wherein at least one of the connection interfaces (111; 112) comprises nanowires.

10. Method according to claim 9, wherein at least one of the first and the second sub-component (101; 102a, b, c, d) comprises a plurality of connection interfaces (111; 112).

11. Method according to any of claims 9 or 10, wherein establishing the permanent connection comprises an application of at least one of pressure, heat, and electrical current to at least one of the pair of connection interfaces (111; 112).

12. Method according to any one of claims 9 to 11, wherein the method comprises growing nanowires on at least one of the first sub-component (101), the second sub-component (102a, b, c, d) and the connection interfaces (111; 112) before establishing the permanent connection.

13. Method according to any one of claims 9 to 12, wherein at least one of the first sub-component (101) and the second sub-component (102a, b, c, d) consists of or comprises a flexible material or is configured as a tape or a sheet.

14. Method according to any one of claims 9 to 13, wherein the metal or metal alloy material is selected from the group comprising titanium, magnesium, steel, copper, aluminum, Invar, alloys and mixtures thereof.

15. Method according to any one of claims 9 to 14, wherein the method further comprises depositing a layer of the metal or metal alloy material on at least one of the first sub-component (101), the second sub-component (102a, b, c, d) and the connection interfaces (111; 112) before growing nanowires.
